# FASCICULE DE BREVET EUROPEEN

(11) **EP 3 353 595 B1**
(45) Date de publication et mention de la délivrance du brevet: **25.03.2026**
(21) Numéro de dépôt: 16774519.9
(22) Date de dépôt: 08.09.2016
(51) Int. Cl.: G02C 1/08, G02C 7/08, G02C 1/00, G02C 11/00, G02C 5/02

(54) **MONTURE ÉLECTRONIQUE POUR DISPOSITIF OPTIQUE ET DISPOSITIF OPTIQUE COMPORTANT UNE TELLE MONTURE**
ELEKTRONISCHE FASSUNG FÜR OPTISCHE VORRICHTUNG, UND MIT EINER SOLCHEN FASSUNG AUSGESTATTETE OPTISCHE VORRICHTUNG
ELECTRONIC FRAME FOR OPTICAL DEVICE AND OPTICAL DEVICE COMPRISING SUCH A FRAME

(30) Priorité: 24.09.2015 EP 15306485
(43) Date de publication de la demande: 01.08.2018
(73) Titulaire: Essilor International, 94220 Charenton-le-Pont (FR)
(72) Inventeur: PATIN, Eric, 73400 Ugine (FR)
(74) Mandataire: Plasseraud IP
(86) Numéro de dépôt international: PCT/FR2016/052246
(87) Numéro de publication internationale: WO 2017/051093

(56) Documents cités:
- WO-A1-2013/025933
- WO-A1-2013/175367
- WO-A2-2013/188805
- FR-A- 967 642
- KR-A- 20140 084 888
- US-A1- 2012 127 420
- US-A1- 2014 204 331
- US-B1- 9 081 212

## Description

L'invention concerne une monture électronique telle que définie dans le jeu de revendications.

Il s'agit d'une monture comportant des composants électroniques, pour réaliser un dispositif optique, par exemple une paire de lunettes équipée de verres de correction, par exemple des lentilles de correction ou des verres de type cellules ophtalmiques à amplitude variable, commandées par un circuit électronique, ou bien encore avec de simples verres, teintés ou non.

Une monture électronique pour dispositif optique est connue de US2012127420.

Une monture électronique pour dispositif optique comporte usuellement :
- un élément de face comprenant un logement d'accueil pour au moins un verre,
- et au moins un composant électronique.

On comprendra par « face », un ensemble d'éléments d'une monture pour un dispositif optique destiné à être placé devant un visage lorsque la monture est portée par un utilisateur.

Les montures électroniques peuvent comporter des pièces fragiles. Il peut s'agir par exemple de connexions électroniques ou de composants électroniques qui peuvent facilement être abimés lorsqu'ils sont déformés ou bien encore de verres actifs qui comportent plusieurs matériaux assemblés ensemble, par exemple des verres de type cellule ophtalmique à amplitude variable, la cellule étant commandée par un circuit électronique.

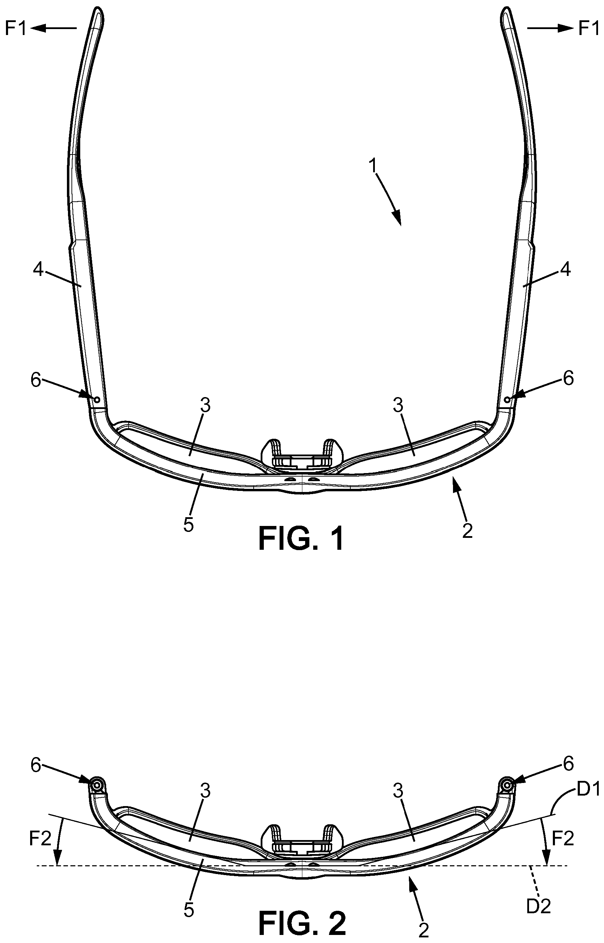

La figure 1 montre une monture électronique 1 de l'état de la technique, comportant une face de monture 2, comprenant un élément de face 5 portant des verres 3, la monture électronique 1 comportant également deux branches 4 reliées chacune à l'élément de face 5 par une charnière 6.

Lorsqu'un utilisateur place la monture électronique 1 sur son visage, il sollicite les charnières 6 des branches 4 de la monture et déforme l'un au moins des éléments de 2 de la monture électronique 1. Plus explicitement, en plaçant la monture, l'utilisateur écarte les branches 4 l'une de l'autre comme indiqué par les flèches F1 sur la figure 1.

Cet effort entraine une déformation des branches 4, des charnières 6 (pouvant être équipées d'éléments de rappel élastique, type ressorts), et de l'élément de face 5 de la monture électronique, voir des verres 3.

Cette déformation générale de l'élément de face 5 est repérée par une flèche F2 sur la figure 2 : le trait plein repéré par la référence D1correspond à la forme générale que suit la face 2 de la monture quand les branches 4 ne sont pas écartées l'une de l'autre. Le trait pointillé repéré par la référence D2 correspond à la forme générale que suit la face 2 de la monture quand les branches 4 sont écartées l'une de l'autre. On observe une déformation par extension de la face 2 de la monture.

L'intensité de la déformation observée est fonction des raideurs relatives des matériaux et des éléments dans lesquels sont réalisés l'élément de face 5, les charnières 6 et les branches 4.

Il est également à noter que la déformation de l'élément de face 2 suivant la flèche F2 entraine également une déformation du logement des verres 3 et donc génère des contraintes sur lesdits verres 3.

L'invention vise à limiter la déformation de certaines parties de la monture électronique pour préserver les éléments fragiles qu'elle comporte et qui ne supportent pas, ou supportent peu, les déformations liées à la mise en place ou au retrait de la monture électronique par un utilisateur.

L'invention telle que définie dans les revendications comporte entre autres une monture électronique pour dispositif optique, comportant un élément de face de monture apte à loger partiellement au moins un verre et comportant au moins un élément électronique, ledit élément de face s'étendant de part et d'autre dudit au moins un verre sur une longueur de retenue dudit verre, la monture électronique étant remarquable en ce que ledit élément de face comporte un élément de renfort s'étendant au moins sensiblement sur toute ladite longueur de retenue dudit au moins un verre.

Ainsi, l'élément de renfort empêche ou, à tout le moins, limite la déformation de l'élément de face retenant une partie du verre au moins à l'endroit où le verre est retenu dans l'élément de face.

L'invention telle que revendiquée contient nécessairement toutes les caractéristiques définies dans la revendication 1. Elle peut de plus également comporter les caractéristiques suivantes, prises séparément ou en combinaison :
- la monture électronique peut comporter deux branches reliées par une charnière à deux extrémités dudit élément de face, et l'élément de renfort peut s'étendre entre les deux extrémités dudit élément de face,
- l'élément de renfort peut être réalisé dans l'un au moins des matériaux appartenant au groupe suivant : alliage d'aluminium, alliage de magnésium, alliage de titane ou fibres de carbone,
- la monture peut comporter un berceau apte à cercler au moins partiellement une partie inférieure dudit au moins un verre,
- l'élément de renfort peut retenir l'élément de face, de préférence par fixation avec le berceau,
- la nacelle et le berceau peuvent être réalisés dans des matériaux différents,
- la nacelle et le berceau peuvent être réalisés en une seule pièce dans un même matériau,
- l'élément de face peut être réalisé en matériau souple,

L'invention concerne également un dispositif optique comportant une monture électronique telle que définie ci-dessus, ainsi qu'au moins un verre fragile.

On comprendra par « verre fragile », un verre qui comporte au moins deux couches de matériaux homogènes assemblées entre elles, chaque couche ayant une épaisseur supérieure à 30 µm.

L'invention sera davantage comprise au regard d'un mode de réalisation qui va maintenant être décrit en faisant référence aux figures parmi lesquelles :
- les figures 1 et 2 sont des vues de dessus d'un dispositif optique comportant une monture électronique équipée de verres, conforme à l'état de la technique,
- la figure 3 est une vue de devant et en perspective éclatée d'une face d'une monture électronique conforme à l'invention,
- et la figure 4 est une vue en coupe suivant le plan III-III montré en figure 3, les éléments de la face étant assemblées ensemble.

Par souci de clarté, seuls les éléments utiles à la compréhension des modes de réalisation décrits ont été représentés.

De plus, les références désignant un même élément d'un mode de réalisation à un autre seront conservées.

Enfin, dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention

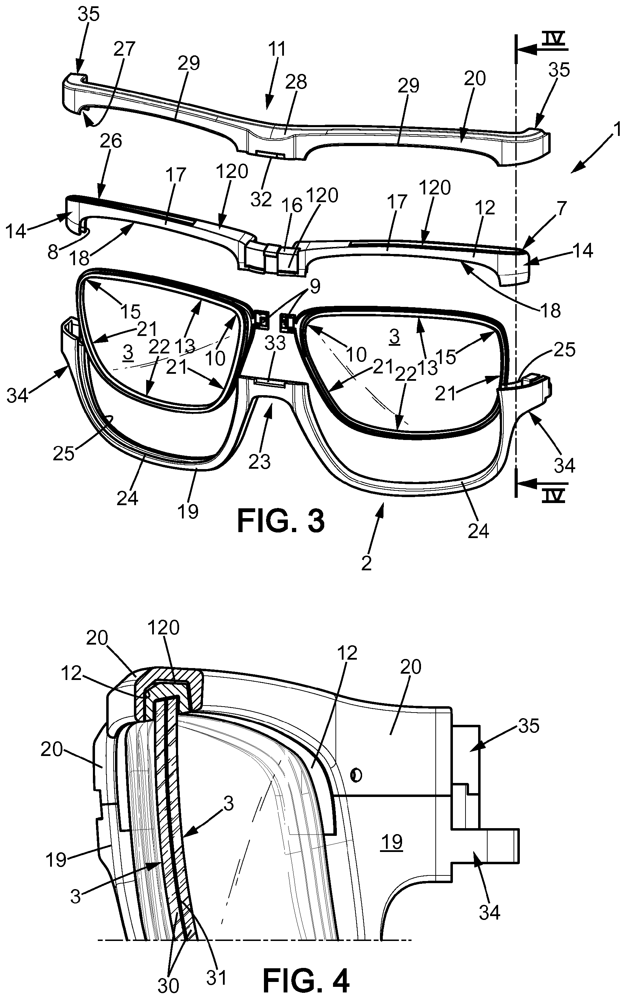

La figure 3 représente plusieurs éléments qui constituent ensemble une monture électronique conforme à l'invention, et plus particulièrement une face 2 d'une monture électronique, c'est-à-dire la partie de la monture électronique qui vient se positionner devant le visage d'un porteur de la monture électronique. Les éléments sont illustrés en étant dissociés les uns des autres.

L'assemblage des différents éléments peut se faire pas vissage ou collage, ou tout autre moyen classique d'assemblage.

La monture électronique 1 comporte un élément de face 7 comprend un logement d'accueil 8, apte à loger partiellement un verre 3. La monture 1 comporte également au moins un composant électronique. Un exemple de composant sera donné par la suite.

Dans l'exemple illustré sur les figures, la monture électronique 1 est conçue pour accueillir deux verres 3, mais il devra être entendu que l'invention n'est pas limitée à une monture électronique conçue pour accueillir deux verres. En effet, la monture électronique conforme à l'invention pourrait être conçue pour n'accueillir qu'un seul verre en forme de masque, sans sortir du cadre de l'invention, le verre en forme de masque étant suffisamment étendu pour s'étendre devant les deux yeux d'un porteur lorsque la monture électronique est portée.

Les verres 3 peuvent être des verres actifs (qui sont associés à un composant électronique 9 permettant de les faire changer d'état lorsque le composant électronique est activé).

Par exemple, les verres 3 sont des cellules ophtalmiques à amplitude variable, des verres à modulation de phase, des verres informatifs, ou des verres hybrides commandées par un circuit électronique 9.

Il devra être entendu que l'invention n'est pas limitée à un dispositif optique comportant une monture électronique équipée de verres actifs. En effet, un dispositif comportant une monture électronique conforme à l'invention peut être équipé de verres passifs, c'est-à-dire de verres qui peuvent présenter des propriétés optiques (ou non) mais qui ne sont pas conçus pour changer d'état (sous commande d'un composant électronique, par exemple).

De plus, dans le cadre de cet exemple, les deux verres 3 sont des verres fragiles, c'est-à-dire des verres qui comportent au moins deux couches de matériaux homogènes assemblées entre elles, chaque couche ayant une épaisseur supérieure à 30 µm.

Les deux matériaux peuvent être identiques ou non,
Ces verres sont intrinsèquement fragiles car une partie importante de leur volume n'est pas homogène, ce qui peut constituer des risques de détérioration à l'interface/assemblage de ces matériaux. En effet, l'utilisation d'un assemblage de matériau d'épaisseur importante, supérieure à 30µm, a pour effet de réduire la solidité du verre en générant, dans la zone d'assemblage des couches de matériaux, des fragilités qui peuvent mener à la rupture du verre ou à des phénomènes de délamination en cas de contraintes mécaniques.

Dans un exemple non limitatif, un verre fragile peut être un assemblage d'au moins 2 coques minérales d'épaisseur supérieure à 30µm, directement collées entre elles, ou séparées par un matériau du type électroactif (matériau électrochrome, cristal liquide..) ou passif (polymère, colle, photopolymère...) .

Dans un autre exemple non limitatif, un verre fragile peut être un verre hybride constitué de matériaux plastique et minéral d'épaisseur non négligeable.

Dans un autre exemple non limitatif, un verre fragile peut être un verre informatif constitué d'un guide d'onde minéral encapsulé par un matériau organique, ou tout autre verre sujet à délamination ou présentant des fragilités du fait de l'utilisation d'un assemblage de matériaux.

La figure 4 montre en coupe un verre 3 de type cellule ophtalmique à amplitude variable, le verre 4 comprenant deux parois parallèles 30, réalisées dans un premier matériau, entre lesquelles est emprisonnée une couche 31 réalisée dans un second matériau.

Chacun des verres 3 est de forme ovoïdale, et est relié à son circuit de commande 9 positionné sur une partie 10 du verre, la partie 10 étant destinée à être positionnée en regard du nez d'un porteur de la monture électronique 1.

La zone de la monture électronique 1 conçue pour être positionnée au niveau du nez d'un porteur sera appelée zone nasale 11 de la monture électronique 1.

Dans l'exemple décrit, l'élément de face 7 recevant au moins partiellement les verres 3 est une nacelle 12 conçue pour accueillir au moins partiellement une partie supérieure 13 des verres 3.

La nacelle 12 est une pièce longitudinale qui s'étend entre deux extrémités 14, les deux extrémités de la nacelle 12 bordant les côtés extérieurs hauts 15 des verres 3.

La nacelle 12 présente une partie centrale 16 située au niveau de la zone nasale 11 de la monture électronique 1.

De part et d'autre de la partie centrale 16, la nacelle 12 présent deux parties symétriques 17 par rapport à la partie centrale 16.

Chaque partie symétrique 17 est formée par un profilé en arc de cercle 18, qui comporte une rainure, correspondant au logement 8 évoqué ci avant, la rainure 8 étant conçue pour accueillir la partie supérieure 13 du verre 3. La courbure de la forme en arc de cercle 18 correspond sensiblement à la forme de la partie supérieure 13 du verre.

La rainure 8 s'étend sur une longueur, appelée longueur de retenue, car le verre est retenu dans la rainure 8 sur toute sa longueur.

La nacelle 12 porte un composant électronique du type ruban flexible 120 portant des bandes conductrices, le ruban flexible 120 s'étendant sensiblement sur toute la longueur de la nacelle 12 et étant fixé par collage au moins partiellement sur une tranche supérieure 26 et sur la partie centrale 16 de la nacelle 12 (la tranche supérieure 26 se situant à l'opposé de la rainure accueillant le verre 3).

Dans le présent exemple de réalisation, la monture électronique 1 comporte également un berceau 19 et un élément de renfort 20 (figure 3), permettant respectivement de cercler les parties latérales 21 et inférieure 22 des verres 3 d'une part, et de rigidifier la nacelle 12 logeant partiellement les verres 3.

Le berceau 19 et l'élément de renfort 20 sont conçus pour se fixer l'un à l'autre, enfermer la nacelle 12 (logeant partiellement les verres 3), et cercler verres 3 de manière à les maintenir en place.

Le berceau 19 comporte une partie centrale de berceau 23 conçue pour appartenir aux éléments de la zone nasale 11 de la monture électronique 1.

De part et d'autre de la partie centrale 23 de berceau 19, ce dernier comporte deux parties 24 de berceau 19 qui sont symétriques par rapport à la partie centrale 23, chacune des parties symétriques 24 de berceau 19 présentant une forme complémentaire à celle des parties latérales 21 et inférieure 22 des verres 4.

Chacune des parties symétriques 24 comporte une rainure interne 25 dans laquelle sont insérées les bords des parties latérales 21 et inférieure 22 des verres 3 (figure 3).

L'élément de renfort 20, rigidifiant la nacelle 12, s'étend sur toute la longueur de la nacelle 1, l'élément de renfort 20 couvrant toute la nacelle 12 sur laquelle il est rapporté, ainsi que les extrémités 14 de la nacelle 12.

Ainsi, l'élément de renfort 20 s'étend sur les deux longueurs de retenue des verres 3 dans la nacelle 12.

L'élément de renfort 20 couvre également la partie centrale 16 de la nacelle 12 appartenant aux éléments de la zone nasale 11 de la monture électronique 1.

L'élément de renfort 20 présente une forme sensiblement identique à celle de la nacelle 12, et comprend une section en forme de U formant un logement 27 pour accueillir la nacelle 12 et le composant électronique 120 fixé sur la nacelle 12 (figures 3 et 4). La forme en U confère à l'élément de renfort 20 une caractéristique géométrique lui permettant notamment de conserver un poids raisonnable, de sorte que la monture électronique 1 soit agréable à porter.

Le logement 27 est suffisamment profond pour accueillir la nacelle 12 de sorte que la nacelle 12 est couverte sur au moins la moitié de son épaisseur.

L'élément de renfort présente ainsi une partie centrale 28 de renfort, qui appartient aux éléments de la zone nasale 11 de la monture électronique, et deux parties 29 de renfort qui sont symétriques par rapport à la partie centrale 38 de renfort et qui s'étendent de part et d'autre de la partie centrale 28.

La partie centrale 28 de renfort est conçue pour être assemblée avec la partie centrale 23 de berceau.

Chacune des parties centrales de renfort 28 ou de berceau 23 comporte une découpe, respectivement 32 et 33, les deux découpes 32 et 33 venant en regard l'une de l'autre quand le berceau 19 est assemblé à l'élément de renfort 20.

De cette façon, quand le berceau 19 et l'élément de renfort 20 sont assemblés et forment un coffrage autour des verres 3 et de la nacelle 12, les deux découpes 32 et 33 forment une ouverture traversant le coffrage de la zone nasale 11 de la monture électronique 1.

Le berceau 19 et l'élément de renfort 20 comportent enfin des extrémités 34 et 35, respectivement, qui sont conformées pour s'assembler avec les extrémités de branches et recevoir une charnière.

Le berceau 19 et la nacelle 16 peuvent être réalisés dans un même matériau ou dans des matériaux différents.

L'élément de renfort 20 venant rigidifier la nacelle 16, on peut prévoir de réaliser la nacelle 16 (et éventuellement le berceau 24) dans un matériau souple, comme par exemple en élastomère thermoplastique, ce qui permet une insertion aisée des bords des verres 3 dans les rainures 8 et 25 de la nacelle 12 et du berceau 24. Le matériau souple permet également d'absorber l'énergie d'éventuels chocs.

Tel n'est pas le cas de l'élément de renfort 20.

L'élément de renfort 20 est réalisé dans un matériau capable de rigidifier suffisamment la nacelle au moins sur la longueur du profilé en arc de cercle 18, (correspondant sensiblement à la longueur de retenue du verre 3 dans une partie symétrique 17 de la nacelle 12) pour que, quand un porteur écarte les branches du dispositif optique, cette partie de la nacelle 12 ne se déforme pas.

L'élément de renfort 20 assure également une rigidification de la zone nasale 11 de la monture électronique qui peut comporter des composants électroniques fragiles, et qui serait une zone de déformation favorisée si seulement les zones des profilés en arc de cercle 18 de la nacelle 12 étaient rigidifiées. En effet, l'élément de renfort 20 ne se déforme que peu, voire pas, lorsqu'il est soumis à l'écartement des branches de la monture.

L'élément de renfort permet aussi de rigidifier la face 2 de la monture électronique 1 sous d'autres types de sollicitations que celles liées à l'ouverture des branches.

Par exemple, l'élément de renfort 20 présente une masse inférieure à 10g, de préférence sensiblement égale à 6g pour un dispositif dont la masse totale (sans les verres) n'excède pas 32g.

La rigidité de l'élément de renfort peut être exprimée comme une flèche résultant d'un couple exercé autour du point de pivot de la charnière, la zone nasale étant fixée : La flèche est mesurée au niveau du point de pivot de la charnière, dans le plan normal à l'axe de la charnière.

On considère par la suite que le dispositif optique est une monture classique de lunette, d'environ 32 g.

Dans un exemple, lorsqu'un couple de 0,05Nm, est appliqué sur une telle monture (effort de 50g à 100 mm de l'axe d'une charnière) équipée d'un élément de renfort 20, la flèche est de 0,07mm. A titre de comparaison, sur une monture plastique classique sans élément de renfort 20, la flèche est de plusieurs dixièmes de millimètres, voire plusieurs millimètres (on mesure 4mm sur une monture plastique standard).

Dans cet exemple, la raideur mesurée pour la monture équipée d'un élément de renfort 20 est sensiblement de 714 Nm/m. Plus la valeur K est grande, plus la monture est rigide. A titre de comparaison, la raideur à ce type de sollicitation sur la monture plastique standard, non équipée avec l'élément de renfort 20 serait de 12,5 Nm/m.

De façon avantageuse, sous l'effort pour écarter les branches lorsqu'on met la monture sur la tête d'un porteur (effort 50g à 100mm de l'axe de la charnière) la déformation du logement du verre est inférieure à 0.1mm ( par exemple, 0.07mm sur une monture (équipée d'un élément de renfort 20 contre 4mm pour une monture plastique standard).

A titre d'exemple, l'élément de renfort 20 peut être réalisé dans un alliage d'aluminium, dans un alliage de magnésium, un alliage de titane ou en fibres de carbone.

Grâce à la description qui précède, on comprend comment l'invention permet de préserver les verres, fragiles ou non fragiles, des montures électroniques grâce à la présence de l'élément de renfort 20 et à sa disposition avantageuse sur la monture.

Il devra toutefois être entendu que l'invention n'est pas spécifiquement limitée au mode de réalisation décrit sur les figures 3 et 4 et qu'elle s'étend à la mise en œuvre de tout moyen équivalent.

Par exemple, le mode de réalisation montré en figures 3 et 4 décrit un élément de renfort 20 rapporté sur la nacelle 12. Un mode de réalisation, selon lequel que la nacelle 12 et l'élément de renfort seraient réalisés en une seule pièce, correspondrait également à un mode de réalisation conforme à l'invention.

Comme définit dans la revendication 1, la nacelle et l'élément de renfort seraient moulés ensemble grâce à une double injection de deux résines thermoplastiques dans un moule.

L'élément de renfort pourrait également consister en une partie de la nacelle présentant une épaisseur plus importante, donnant audit élément de renfort une dureté suffisante pour empêcher la déformation de la zone du profilé en arc de cercle de la nacelle accueillant un verre 3.

## Revendications

1. Monture électronique (1) pour dispositif optique, comportant un élément de face (7) de monture apte à loger partiellement au moins un verre (3) et comportant au moins un composant électronique (120), ledit élément de face (7) s'étendant de part et d'autre dudit au moins un verre (3) sur une longueur de retenue dudit au moins un verre (3), **caractérisée en ce que** ledit élément de face (7) comporte un élément de renfort (20) s'étendant au moins sensiblement sur toute ladite longueur de retenue dudit au moins un verre, et
**en ce que** l'élément de face (7) est une nacelle (12) apte à loger une partie supérieure (13) dudit au moins un verre (3) et ledit élément de renfort (20) est réalisé d'une seule pièce avec la nacelle grâce à une double injection de deux résines thermoplastiques dans un moule.

2. Monture électronique (1) selon la revendication 1, **caractérisée en ce qu'**elle comporte deux branches reliées par une charnière à deux extrémités (14) dudit élément de face (7), et **en ce que** l'élément de renfort (20) s'étend entre les deux extrémités (14) dudit élément de face (7).

3. Monture électronique (1) selon l'une quelconque des revendications précédentes, **caractérisée en ce qu'**elle comporte un berceau (24) apte à cercler au moins partiellement une partie inférieure (22) dudit au moins un verre (3).

4. Monture électronique (1) selon la revendication 3, **caractérisée en ce que** la nacelle (12) et le berceau (20) sont réalisés dans des matériaux différents.

5. Monture électronique (1) selon la revendication 3, **caractérisée en ce que** la nacelle (12) et le berceau (20) sont réalisés en une seule pièce dans un même matériau.

6. Monture électronique (1) selon l'une quelconque des revendications précédentes 1 à 5, **caractérisée en ce que** l'élément de face (7) est réalisé en matériau souple.

7. Monture électronique (1) selon la revendication 6, **caractérisée en ce que** le matériau souple est un élastomère thermoplastique.

8. Dispositif optique comportant une monture électronique (1) selon l'une quelconque des revendications 1 à 7, et comportant au moins un verre fragile (3).

## Patentansprüche

1. Elektronische Fassung (1) für eine optische Vorrichtung, umfassend ein Fassungsfrontelement (7), das dazu fähig ist, mindestens ein Glas (3) teilweise aufzunehmen, und mindestens eine elektronische Komponente (120) umfasst, wobei sich das Frontelement (7) auf beiden Seiten des mindestens einen Glases (3) über eine Haltelänge des mindestens einen Glases (3) erstreckt, **dadurch gekennzeichnet, dass** das Frontelement (7) ein Verstärkungselement (20) umfasst, das sich im Wesentlichen über die gesamte Haltelänge des mindestens einen Glases erstreckt, und
dass das Frontelement (7) ein Träger (12) ist, der dazu fähig ist, einen oberen Teil (13) des mindestens einen Glases (3) aufzunehmen, und das Verstärkungselement (20) dank einer doppelten Einspritzung zweier thermoplastischer Harze in eine Form mit dem Träger einstückig ausgebildet ist.

2. Elektronische Fassung (1) nach Anspruch 1, **dadurch gekennzeichnet, dass** sie zwei Arme umfasst, die an zwei Enden (14) des Frontelements (7) durch ein Scharnier verbunden sind, und dass sich das Verstärkungselement (20) zwischen den zwei Enden (14) des Frontelements (7) erstreckt.

3. Elektronische Fassung (1) nach einem der vorhergehenden Ansprüche, **dadurch gekennzeichnet, dass** sie eine Umfassung (24) umfasst, die dazu fähig ist, einen unteren Teil (22) des mindestens einen Glases (3) mindestens teilweise einzufassen.

4. Elektronische Fassung (1) nach Anspruch 3, **dadurch gekennzeichnet, dass** der Träger (12) und die Umfassung (20) aus unterschiedlichen Materialien hergestellt sind.

5. Elektronische Fassung (1) nach Anspruch 3, **dadurch gekennzeichnet, dass** der Träger (12) und die Umfassung (20) einstückig aus einem gleichen Material hergestellt sind.

6. Elektronische Fassung (1) nach einem der vorhergehenden Ansprüche 1 bis 5, **dadurch gekennzeichnet, dass** das Frontelement (7) aus einem flexiblen Material hergestellt ist.

7. Elektronische Fassung (1) nach Anspruch 6, **dadurch gekennzeichnet, dass** das flexible Material ein thermoplastisches Elastomer ist.

8. Optische Vorrichtung, die eine elektronische Fassung (1) nach einem der Ansprüche 1 bis 7 umfasst, die mindestens ein zerbrechliches Glas (3) umfasst.

## Claims

1. Electronic frame (1) for an optical device, said frame including a front frame element (7) able to partially house at least one lens (3) and including at least one electronic component (120), said front element (7) extending, on either side of said at least one lens (3), over a retained length of said at least one lens (3), **characterized in that** said front element (7) includes a reinforcing element (20) extending at least substantially over all said retained length of said at least one lens, and
**in that** the front element (7) is a holder (12) able to house an upper portion (13) of said at least one lens (3) and said reinforcing element (20) is integrally formed with the holder by virtue of double-shot injection moulding of two thermoplastic resins in a mould.

2. Electronic frame (1) according to Claim 1, **characterized in that** it includes two temples connected by a hinge at two ends (14) of said front element (7), and **in that** the reinforcing element (20) extends between the two ends (14) of said front element (7).

3. Electronic frame (1) according to either one of the preceding claims, **characterized in that** it includes a cradle (24) able to at least partially encircle a lower portion (22) of said at least one lens (3).

4. Electronic frame (1) according to Claim 3, **characterized in that** the holder (12) and the cradle (20) are made of different materials.

5. Electronic frame (1) according to Claim 3, **characterized in that** the holder (12) and the cradle (20) are a single part made of a given material.

6. Electronic frame (1) according to any one of the preceding Claims 1 to 5, **characterized in that** the front element (7) is made from a flexible material.

7. Electronic frame (1) according to Claim 6, **characterized in that** the flexible material is a thermoplastic elastomer.

8. Optical device including an electronic frame (1) according to any one of Claims 1 to 7, and including at least one fragile lens (3).
